# EUROPEAN PATENT APPLICATION

(11) **EP 1 595 824 A1**
(43) Date of publication of application: **16.11.2005**
(21) Application number: 05076023.0
(22) Date of filing: 02.05.2005
(51) Int. Cl.: B65G 13/07, B65G 47/26

(54) **Belt driven roller conveyor**

(30) Priority: 12.05.2004 NL 1026177
(71) Applicant: CSi Industries B.V., 4941 VL Raamsdonksveer (NL)
(72) Inventor: van de Klundert, Mark, 4941 VL Raamsdonksveer (NL)
(74) Representative: Houben, Christiaan Hein Willem Frans

(57) **Abstract**

The invention relates to a conveyor track comprising a frame in which rotatable rollers (2) are arranged one behind the other with their centre axes substantially transverse to the direction of the track. The conveyor track furthermore comprises a circulating drive belt (4) which extends substantially in the direction of the track, which drive belt (4) has a friction surface which engages on the rollers (2) in order to cause them to rotate. The conveyor track has guide rollers (8) which are arranged with their centre axes substantially transverse to the direction of the track and which engage on the drive belt (4) in order to guide it in such a manner that the drive belt (4) forcefully engages on the rollers (2). At least one of the guide rollers (8) is substantially cylindrical and has end sections with gradually increasing diameter, so that the guide roller (8) can exert a reaction force on the drive belt (4) in order to force the latter towards the centre of the guide roller (8).

## Description

The invention relates to a conveyor track comprising a frame in which rotatable rollers are arranged one behind the other with their centre axes substantially transverse to the direction of the track, as well as a circulating substantially flat drive belt which extends substantially in the direction of the track, which drive belt has a friction surface which engages on the rollers in order to cause them to rotate, the conveyor track furthermore having guide rollers which are arranged with their centre axes substantially transverse to the direction of the track and which engage on the drive belt in order to guide it in such a manner that the drive belt forcefully engages on the rollers.

A conveyor track of this type is known.

A known problem with conveyor tracks of this type is that a transverse force causes a lateral displacement of the drive belt, as a result of which the latter may run off the guide rollers. This problem occurs in particular with conveyor tracks with "oblique" sections, such as described for example in US 6,685,005, but the transverse forces may also be caused by inaccuracies in the construction.

Many conveyor tracks are subdivided into sections. Most conveyor tracks are designed as having sections in which the centre axes of the rollers extend perpendicular to the direction of the track. On these sections, an object to be conveyed is conveyed straight ahead with respect to the track. There are also conveyor tracks provided with "oblique" sections in which the centre axes of the rollers are not arranged perpendicular to the direction of the track. On these sections, an object arranged on the track is moved to one side of the track. At the location of such an "oblique" section, the drive belt is subjected to a transverse force by the "oblique" rollers which causes a lateral displacement of the drive belt as a result of which the latter may run off the guide rollers.

In order to prevent the drive belt from running off the guide rollers, it is known from JP 2001 106315 to use a drive belt which, on its underside, has an integrally formed guiding protrusion with a V-shaped cross-section. This V-shaped guide cooperates with a V-shaped groove in the guide rollers. A disadvantage of this known type of drive belt with a V-shaped guide is that the transverse forces cause considerable wear to the belt, as a result of which the drive belt has to be replaced regularly.

With another known solution which has been described in US 6,685,005, the drive belt is lifted at the location of the "oblique" sections by an edge region and pressed against the rollers, while the other edge is received in guide wheels having a groove. The drawback of this solution is that the drive belt is subject to excessive wear at the edges when displaced in the transverse direction, as a result of which the drive belt has to be replaced regularly.

It is an object of the invention to provide an improved conveyor track in which the drive belt is subject to less wear.

This object is achieved according to the invention by a conveyor track in accordance with the preamble of claim 1, characterized in that at least one of the guide rollers is substantially cylindrical and has end sections with gradually increasing diameter with respect to the substantially cylindrical section, such that when the drive belt shifts with respect to the guide roller from a central position in transverse direction, it runs up against one of the end sections of the guide roller and is forced back towards the central position by the end section concerned.

During operation, according to the invention, the drive belt will run up against the outer surface of one of the end sections as a consequence of the transverse force. As a result, a reaction force is produced by the guide roller on the drive belt which will force the latter back to the centre of the guide roller. The conveyor track according to the invention thus has a self-correcting capability with regard to the position of the drive belt.

The invention will be explained in more detail below with reference to the drawing, in which:
Fig. 1 shows a plan view of a section of a conveyor track with rollers arranged substantially perpendicular to the direction of the track;
Fig. 2 shows a plan view of a section of a conveyor track with rollers arranged substantially perpendicular to the direction of the track and a section with rollers arranged "obliquely";
Fig. 3 shows a diagrammatic longitudinal section of a section of a conveyor track according to the invention;
Fig. 4 shows a cross section of a conveyor track according to the invention;
Fig. 5 shows a section through a guide roller according to the invention; and
Fig. 6 shows a plan view of an alternative embodiment of a guide roller according to the invention.

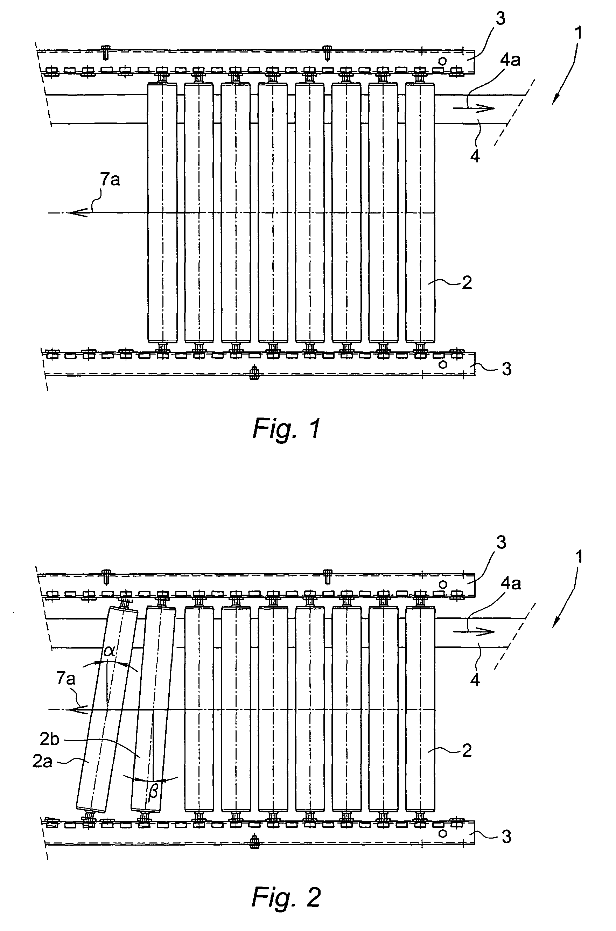

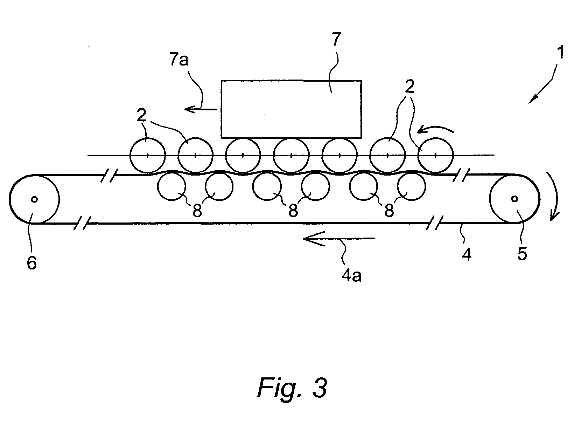

Figs. 1-3 show a section of a conveyor track 1. As can be seen in Figs. 1-3, the conveyor track 1 comprises a frame and two parallel frame parts 3. Transport rollers 2 are arranged one behind the other between the parallel frame parts 3. A drive belt 4 is arranged under the transport rollers 2 which engages on the underside of the transport rollers 2. The drive belt 4 preferably is a circulating belt which is driven by means of a drive roller 5 and/or 6 (see Fig. 3) driven by a motor. When the drive belt 4 is moved as indicated in the figures by arrow 4a, the friction force between the upper side of the drive belt 4 and the circumferential surface of the transport rollers 2 causes the rollers to be rotated in such a manner that an object 7 arranged thereon is conveyed over the conveyor track in the conveying direction 7a.

In order to ensure that the transport rollers 2 are driven well, it is important to ensure that sufficient friction force is applied between the outer surface of the drive belt and the transport rollers 2. For this reason, guide rollers 8 are arranged on the inside of the drive belt 4 which ensure that the drive belt 4 is pressed against the transport rollers 2 with sufficiently high force. Preferably, viewed in the longitudinal direction, the guide rollers 8 are arranged between in each case two transport rollers 2, as illustrated in Fig. 3. It is of course also possible to construct the conveyor track with fewer guide rollers 8.

Fig. 2 shows that there can also be sections of the conveyor track where the transport rollers 2 are not arranged substantially perpendicular to the conveying direction 7a, but are arranged "obliquely", as shown in Fig. 2. The centre axis of transport roller 2a in Fig. 2 is at an angle α relative to the substantially perpendicularly arranged transport rollers 2. The centre axis of transport roller 2b is at an angle β relative to the perpendicularly arranged transport rollers 2. Usually, with conveyor tracks of this type, there are sections designed with perpendicular transport rollers 2, as shown on the right in Fig. 2. In addition, there are sections with "obliquely" arranged transport rollers 2a, 2b. On the perpendicular sections, an object 7 which is on the track is only moved in the conveying direction 7a. On the "oblique" sections, an object is also pushed to one side of the conveyor track 1. In the example shown in Fig. 2, an object on the conveyor track 1 would be moved to the side of the track 1 which is at the top in the figure. This type of structure is used in practice to line up objects one behind another in a neat manner.

As a result of the friction force which occurs between the "oblique" rollers 2a, 2b and the drive belt 4, a transverse force, i.e. a force transverse to the conveying direction 7a of the conveyor track 1, is applied to the drive belt 4. This transverse force may cause a displacement of the drive belt 4 relative to the guide rollers 8, as a result of which the drive belt 4 could run off these guide rollers 8. With "obliquely" arranged transport rollers 2a, 2b, this is a problem which is known per se, as is for example evident from US 6,085,005.

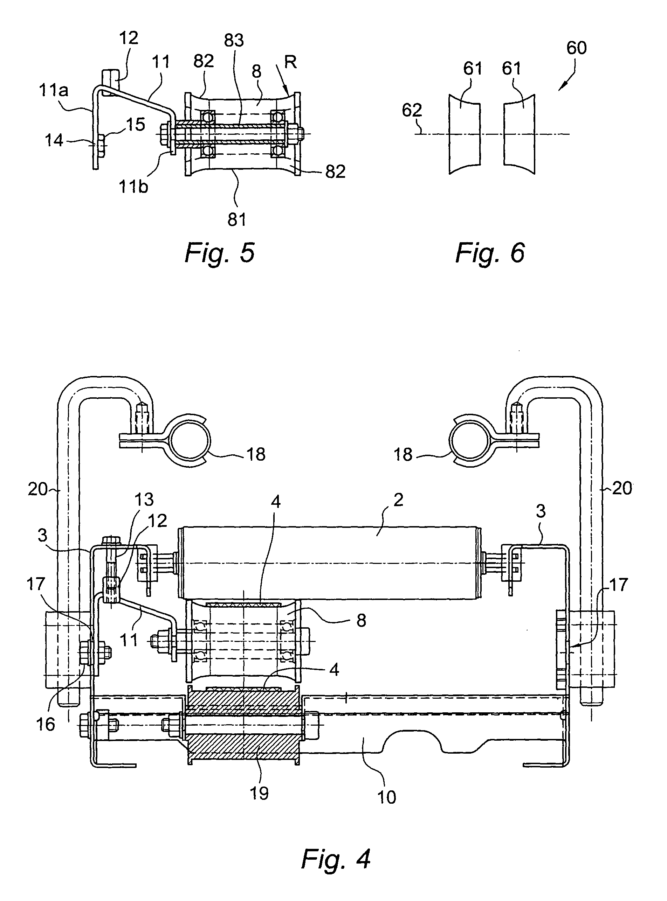

Fig. 4 shows a cross section of an embodiment of a conveyor track according to the invention which provides a solution to the abovementioned problem of the conveyor belt running off the guide rollers. The components in Fig. 4 which are identical to those of Figs. 1-3 are designated by the same reference numerals. The parallel frame parts 3 between which the transport rollers 2 are arranged can be seen. The parallel frame parts 3 are connected by means of a transverse beam 10.

The guide rollers 8 are fitted on the frame by means of a securing bracket 11. The securing bracket 11 has legs 11a and 11b. The rotation shaft of the guide roller 8 is arranged on the leg 11b of the securing bracket 11. A bush 12 provided with internal screw thread is fitted on the securing bracket 11 (see also Fig. 5). The internal screw thread inside the bush 12 can interact with the screw thread of a bolt 13 which can be inserted from the top of one of the frame parts 3 (on the left in Fig. 4) through a hole provided for this purpose. One leg 11a of the bracket 11 is provided with a welded-on nut 15 and a hole 14 provided in line with the latter in the leg 11a. In the mounted state, the leg 11a lies against a sidewall of the frame part 3, as shown in Fig. 4. The leg 11a of the bracket 11 is fitted tightly against the frame part 3 by means of a bolt 16 which cooperates with the nut 15. A slotted hole 17 is arranged in the sidewall of the frame part 3 for inserting the bolt 16. By not completely tightening the bolt 16 during fitting and turning bolt 13, it is possible to achieve an accurate vertical adjustment of the bracket 11 with the guide roller 8 relative to the frame and the transport rollers 2 arranged in the latter. When the desired height of the guide rollers 8 relative to the transport rollers 2 has been set, the bracket 11 can be secured by tightening the bolt 16. In this manner, it is possible to achieve an accurate vertical adjustment and thereby also an accurate adjustment of the pressure force of the drive belt 4 on the transport rollers 2.

As can be seen in Fig. 5, the roller 8 has a central section 81 which is substantially cylindrical. Furthermore, the guide roller 8 has two symmetrically mounted end sections 82, the diameter of which in relation to the central section 81 gradually increases. The increasing diameter preferably follows a circular curve with a constant radius R. It is also possible to allow the increasing diameter of the end sections 82 to follow another curve with a variable radius, such as for example an ellipse. The resulting shape of the guide roller 8 could be described as being substantially diabolo-shaped.

As can be seen in Fig. 4, the drive belt 4 has a width which is slightly larger than the width of the cylindrical central section 81 of the guide roller 8. When the drive belt is in a central position relative to the roller 8 (see Fig. 4), the edge regions of the drive belt 4 are on the rising section 82 of the roller 8. Preferably, the cylindrical part 81 of the guide roller 8 has an axial length of 40 mm, the radius R of the circular curve preferably is 20 mm and the width of the drive belt is preferably 50 mm.

When the drive belt 4 moves sideways under the influence of a transverse force, the edge of the drive belt 4 will run up against the end section 82 on one side and on the other side the edge of the drive belt 4 will run off the other end section 82. As a result, the guide belt 4 is subject to an increasing reaction force of the roller 8 on one side and on the other side the reaction force of the roller 8 on the belt decreases. Consequently, the guide roller 8 will force the drive belt 4 back to the central position, as is shown in Fig. 4.

Fig. 4 also shows that supporting rollers 19 have been arranged in the frame which serve to support the drive belt 4 on the return side, i.e. the underside in the figure. Furthermore, tubular guide elements 18 have been arranged on the frame which are over the rollers 2 of the conveyor track and act as lateral guides for the objects 7 positioned on the conveyor track 1. The tubular guide elements 18 are supported by mounting elements 20, which mounting elements 20 are arranged at regular intervals.

In the embodiment shown in the figures, the guide roller 8 is formed as a single entity. Obviously, it is also possible to form the guide roller from a number of parts. Fig. 6 shows an example of what a roller of this type might look like. The roller 60 shown in Fig. 6 comprises two separate parts 61 arranged at a distance from one another which are mounted freely rotatable with respect to the centre axis 62. It is also conceivable for a guide roller 8 to have a separate central part 81 and two end parts 82 which are arranged on the rotation shaft 83 (see Fig. 5) and are pressed together. It will be clear to those skilled in the art that many variations of the guide roller are possible which are nevertheless covered by the scope of protection of the invention.

## Claims

1. Conveyor track comprising a frame in which rotatable rollers are arranged one behind the other with their centre axes substantially transverse to the direction of the track, as well as a circulating substantially flat drive belt which extends substantially in the direction of the track, which drive belt has a friction surface which engages on the rollers in order to cause them to rotate, the conveyor track furthermore having guide rollers which are arranged with their centre axes substantially transverse to the direction of the track and which engage on the drive belt in order to guide it in such a manner that the drive belt forcefully engages on the rollers, **characterized in that** at least one of the guide rollers is substantially cylindrical and has end sections with gradually increasing diameter with respect to the substantially cylindrical section, such that when the drive belt shifts with respect to the guide roller from a central position in transverse direction, it runs up against one of the end sections of the guide roller and is forced back towards the central position by the end section concerned.

2. Conveyor track according to claim 1, in which the diameter of the guide roller increases at the end sections according to a curve with a constant radius of curvature.

3. Conveyor track according to claim 1, in which the diameter of the guide roller increases at the end sections according to a curve with a variable radius of curvature.

4. Conveyor track according to one of the preceding claims, in which the guide roller comprises a number of roller parts.

5. Conveyor track according to one of the preceding claims, in which the guide roller has a cylindrical central section with an axial length which is smaller than the width of the drive belt.

6. Conveyor track according to one of the preceding claims, in which the vertical position of the guide rollers relative to the rollers of the conveyor track can be adjusted.

7. Guide roller for a conveyor track according to one of the preceding claims.
